**Europäisches Patentamt**

**European Patent Office**

**Office européen des brevets**

(19)

(11) Veröffentlichungsnummer: **0 052 281**
**B1**

(12) # EUROPÄISCHE PATENTSCHRIFT

(45) Veröffentlichungstag der Patentschrift:
**20.03.85**

(51) Int. Cl.⁴: **A 21 B 3/16,** B 05 C 5/00

(21) Anmeldenummer: **81109193.3**

(22) Anmeldetag: **29.10.81**

(54) **Vorrichtung zum Beschichten eines Förderbandes mit einem flüssigen Medium, insbesondere zum Beschichten eines Backbandes mit einem Trennmittel.**

(30) Priorität: **14.11.80 CH 8461/80**

(43) Veröffentlichungstag der Anmeldung:
**26.05.82 Patentblatt 82/21**

(45) Bekanntmachung des Hinweises auf die Patenterteilung:
**20.03.85 Patentblatt 85/12**

(84) Benannte Vertragsstaaten:
**CH DE FR GB IT LI SE**

(56) Entgegenhaltungen:
**DE - A - 2 834 180**
**FR - A - 1 000 921**
**GB - A - 784 683**
**GB - A - 823 102**
**US - A - 3 077 857**

(73) Patentinhaber: **Rud. Bieri Maschinen und Apparatebau AG, Bietenholzstrasse 3, CH-8307 Effretikon (CH)**

(72) Erfinder: **Bieri, Rudolf, Zielstrasse 21,**
**CH-8400 Winterthur (CH)**

(74) Vertreter: **Schmauder, Klaus Dieter et al, c/o Schmauder & Wann Patentanwaltsbüro Nidelbadstrasse 75, CH-8038 Zürich (CH)**

ACTORUM AG

## Beschreibung

Die Erfindung betrifft eine Vorrichtung gemäss Oberbegriff des Anspruches 1.

Eine Vorrichtung der eingangs genannten Art ist aus der GB-A 823 102 bekannt. Die am Umfang einer Umlenktrommel des Förderbandes angeordnete Aufgabevorrichtung weist einen emulgiertes Fett enthaltenden Trog auf, in den eine erste Walze eintaucht. Letztere ist am Umfang mit einem wendelförmig angeordneten Mitnehmerstreifen aus Filz versehen, der Fett aus dem Trog aufnimmt und an eine mit Filz bespannte Übertragungswalze abgibt, die federnd an dem auf der Umlenkrolle befindlichen Förderband anliegt. Oberhalb der Übertragungswalze ist eine Abstreifvorrichtung zum Abstreifen überflüssigen Fetts angeordnet. Die Vorrichtung hat den Nachteil, dass die Filzbespannung der Übertragungswalze vollständig mit Fett getränkt sein muss, um auf dem Förderband einen durchgehenden Fettfilm zu erzeugen. Mit einer solchen Übertragungswalze kann dann aber nur ein relativ dicker Fettfilm erzeugt werden. Aus diesem Grunde ist noch ein zusätzlicher Abstreifer vorhanden, der überschüssiges Fett entfernen soll. Ein solcher Abstreifer ist aber ebenfalls nicht in der Lage, einen optimal dünnen Fettfilm zu erzeugen. Wegen der bei solchen Förderbändern möglichen Wellungen in Längsrichtung des Förderbandes lässt sich mit dem Abstreifer auch kein gleichmässig dicker Fettfilm erzielen.

Aufgabe der Erfindung ist es, eine Vorrichtung der eingangs genannten Art so auszubilden, dass sie eine dünne und gleichmässige Auftragung des Mediums auf dem Förderband gewährleistet.

Die gestellte Aufgabe wird durch die kennzeichnenden Merkmale des Anspruches 1 gelöst.

Die Wischer ermöglichen eine gleichmässige Verteilung kleinster Mengen des Mediums, wodurch sich besonders dünne Mediumsfilme herstellen lassen. Da überdies etwaige Unebenheiten des Förderbandes in Förderrichtung verlaufen, können sich die in Förderrichtung verlaufenden Wischer solchen Unebenheiten anpassen, wodurch eine besonders gleichmässige Beschichtung über die ganze Breite des Förderbandes gewährleistet wird.

Vorteilhafte Ausgestaltungen der Erfindung sind in den Ansprüchen 2 bis 12 umschrieben.

Bei der Ausgestaltung der Vorrichtung nach Anspruch 2 gewährleisten die Wischer eine besonders gleichmässige Anpassung an das Förderband, sodass Unregelmässigkeiten bei der Verteilung des Mediums auf dem Förderband vermieden werden. Dies wird durch eine Ausbildung nach Anspruch 3 unterstützt, wodurch sich in jedem Falle eine gleichmässige Anpassung der Vorrichtung an die Oberfläche der Umlenktrommel ergibt, gleichgültig ob das Förderband in sich gewellt oder verzogen ist oder beim Spannen des Förderbandes die Umlenktrommel in ihrer Ausrichtung geändert werden muss. Eine Ausbildung der Vorrichtung nach Anspruch 4 gestattet eine vorteilhafte schwimmende Lagerung der Vorrichtung. Zum Zurückstellen der Vorrichtung vom Förderband ist eine Ausgestaltung nach Anspruch 5 besonders zweckmässig.

Die Aufgabevorrichtung zur Aufbringung des Mediums ist zweckmässigerweise nach Anspruch 6 ausgestaltet. Die Aufgabestifte ermöglichen ein besonders einfaches und dosiertes Aufbringen des Mediums, wobei je nach Grad der Aufbringung mehr oder weniger Aufgabestifte angeordnet werden können. Die Aufgabestifte bestehen zweckmässigerweise aus einem konsistenten Material, welches auf die Förderbahn aufgerieben wird. Die Wischvorrichtung sorgt dann für eine schnelle gleichmässige Verteilung des aufgebrachten Mediums. Zweckmässigerweise liegen die Aufgabestifte unter Vorspannung am Förderband an. Diese Vorspannvorrichtung kann gemäss Anspruch 7 ausgestaltet sein.

Eine besonders einfache Ausbildung der Aufgabevorrichtung ist in Anspruch 8 definiert. Durch die Anzahl der quer zum Förderband angeordneten Aufgabeglieder kann das Medium auf dem Förderband dosiert werden. Dabei ist eine Ausgestaltung der Aufgabeglieder nach Anspruch 9 von Vorteil. Eine bevorzugte Ausbildung der Aufgabevorrichtung ist in Anspruch 10 umschrieben, die zweckmässigerweise nach Anspruch 11 weitergebildet ist. Die Ausgestaltung der Vorrichtung nach Anspruch 12 vermeidet Stösse auf die Antriebsvorrichtung und das Gestell der Vorrichtung.

Obwohl die Vorrichtung zum Beschichten der verschiedensten Förderbänder geeignet ist, entfaltet sie jedoch für die Beschichtung eines Backbandes besondere Vorteile, da sie eine besonders gleichmässige fein dosierbare Beschichtung ermöglicht. Dies ist eine Voraussetzung zur Herstellung von Backwaren mit gleichbleibenden, einheitlichen Eigenschaften.

Ausführungsbeispiele der erfindungsgemässen Vorichtung zum Beschichten eines Förderbandes werden nachfolgend anhand schematischer Zeichnungen näher beschrieben, dabei zeigen:

Fig. 1 die Vorrichtung in Seitenansicht mit teilweise aufgeschnittener Seitenwand;
Fig. 2 die Vorrichtung der Fig. 1 im Grundriss und mit abgenommenem Deckel;
Fig. 3 die Aufgabevorrichtung der Vorrichtung der Fig. 1 im Ausschnitt und in grösserem Massstab;
Fig. 4 eine weitere Aufgabevorrichtung für die Vorrichtung der Fig. 1 im Ausschnitt und teilweise geschnitten.

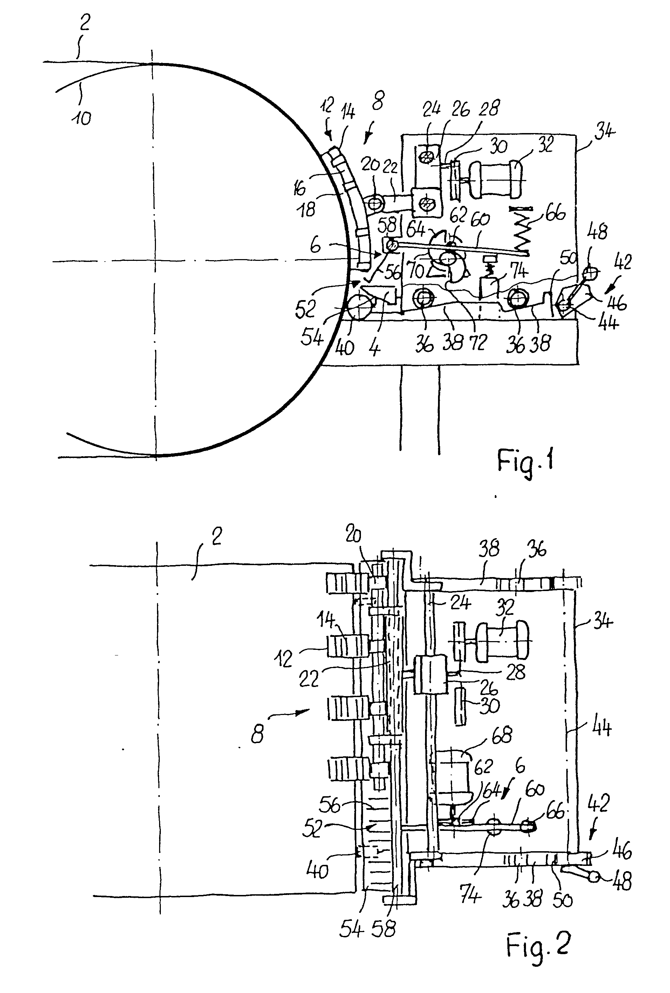

Die Fig. 1 bis 3 zeigen eine Vorrichtung zum Beschichten eines Förderbandes 2, das vorzugsweise ein Backband aus Stahlblech ist, mit einem Medium 4, das vorzugsweise ein Trennmittel ist. Die Vorrichtung enthält eine Aufgabevorrichtung 6 für das Medium und eine nachgeschaltete Wischervorrichtung 8 zum Verteilen des Mediums auf dem Förderband. Die Aufgabevorrichtung 6 und die Wischervorrichtung 8 sind am Umfang einer Umlenktrommel 10 des Förderbandes 2 angeordnet.

Die Wischervorrichtung 8 weist mehrere Wischer 12 auf, die in Richtung des Förderbandes verlaufen und mit Abstand voneinander angeordnet sind. Die Wischer 12 sind quer zur Förderrichtung hin- und herbewegbar. Jeder Wischer 12 enthält ein Wischerblatt 14, das eine elastische Unterlage 16, z.B. aus Schaumgummi, trägt, auf dem eine Kontaktschicht 18 angeordnet ist, die vorzugsweise aus einem Filz besteht. Durch diese Ausbildung ergibt sich eine optimale Anpassung des Wischers 12 an die Oberfläche des Förderbandes, wobei sich der Wischer 12 auch Unebenheiten des Förderbandes anpassen kann, die in der Regel in Förderrichtung des Förderbandes verlaufen. Die Wischer 12 sind mittels ihrer Wischerblätter 14 über Gelenke 20 an einem gemeinsamen Halter 22 befestigt, der seinerseits an zwei Führungsstäben 24 quer zur Richtung des Förderbandes 2 verschiebbar geführt ist. Der Halter 22 enthält eine Kulisse 26, in die ein Mitnehmerstift 28 eingreift, der an einer umlaufenden Kette 30 befestigt ist. Letztere wird von einem Motor 32 angetrieben.

Um die Wischer 12 unter Vorspannung am Umfang der Umlenktrommel 10 bzw. des darauf geführten Förderbandes 2 zur Anlage zu bringen, ist die Vorrichtung schwimmend gelagert. Hierzu ist das Gehäuse 34 der Vorrichtung mit Rollen 36 versehen, die auf Schienen 38 rollen, welche gegen die Umlenktrommel 10 geneigt sind. Dadurch wird eine Schwerkraftkomponente erzeugt, welche die Vorrichtung gegen die Umlenktrommel 10 drückt. Zur Abstandhaltung der Vorrichtung und Begrenzung der Anpressung ist die Vorrichtung mit Stützrollen 40 ausgestattet, welche an der Umlenktrommel 10 bzw. dem darüber geführten Förderband 2 anliegen. Zweckmässigerweise ist der Abstand der Stützrollen 40 zum Gehäuse 34 einstellbar, um dadurch die Anpresskraft bzw. den Vorschub der Vorrichtung gegen das Förderband 2 einstellen zu können. Eine Arretiervorrichtung 42 dient zum Abheben der Vorrichtung vom Förderband. die Arretiervorrichtung 42 weist einen an einer Welle 44 angeordneten Exzenter 46 auf, der mittels eines Handhebels 48 gegen einen Anschlag 50 schwenkbar ist. Liegt der Exzenter am Anschlag 50 an, so ist die Vorrichtung von dem Förderband 2 bzw. der Umlenktrommel 10 abgehoben.

Die Aufgabevorrichtung 6 enthält mehrere quer zum Förderband 2 angeordnete Aufgabeglieder 52, die aus einer Vorratswanne 54 Medium 4 gegen das Förderband 2 schleudern. Im vorliegenden Beispiel sind die Aufgabeglieder 52 als Arme 56 ausgebildet, die an einer Welle 58 angeordnet sind, die über einen Mitnehmerhebel 60 und eine Mitnehmerrolle 62 mit einer Nockenscheibe 64 zusammenwirkt. Eine Vorspannfeder 66 presst den Mitnehmerhebel 60 gegen die Nockenscheibe 64. Die von einem Motor angetriebene Nockenscheibe 64 enthält allmählich ansteigende Kurventeile 70, die in Unstetigkeitsstellen 72 übergehen. An diesen wird der unter der Federvorspannung stehende Mitnehmerhebel 60 plötzlich frei und schnellt vor. Zum Abfangen der Bewegung an der Unstetigkeitsstelle 72 dient ein Stossdämpfer 74, auf den der Mitnehmerhebel 60 aufschlägt. Beim Vorschnellen des Mitnehmerhebels 60 wird der Arm 56 gegen das Förderband 2 vorgeschnellt. Der Arm 56 enthält einen gegen das Förderband 2 abgewinkelten Teil 76, der mit einem Mitnehmernapf 78 ausgestattet ist. Beim Vorschnellen des Armes 56 nimmt das Aufgabeglied 52 über den Mitnehmernapf 78 Medium aus der Vorratswanne 54 mit und schleudert dies gegen das Förderband 2. Je nach dem gewünschten Grad der Aufbringung können mehr oder weniger Aufgabeglieder 52 an der Welle 58 angeordnet sein. Nicht näher dargestellte Einrichtungen dienen zur Niveauregulierung des Mediums 4 in der Vorratswanne 54.

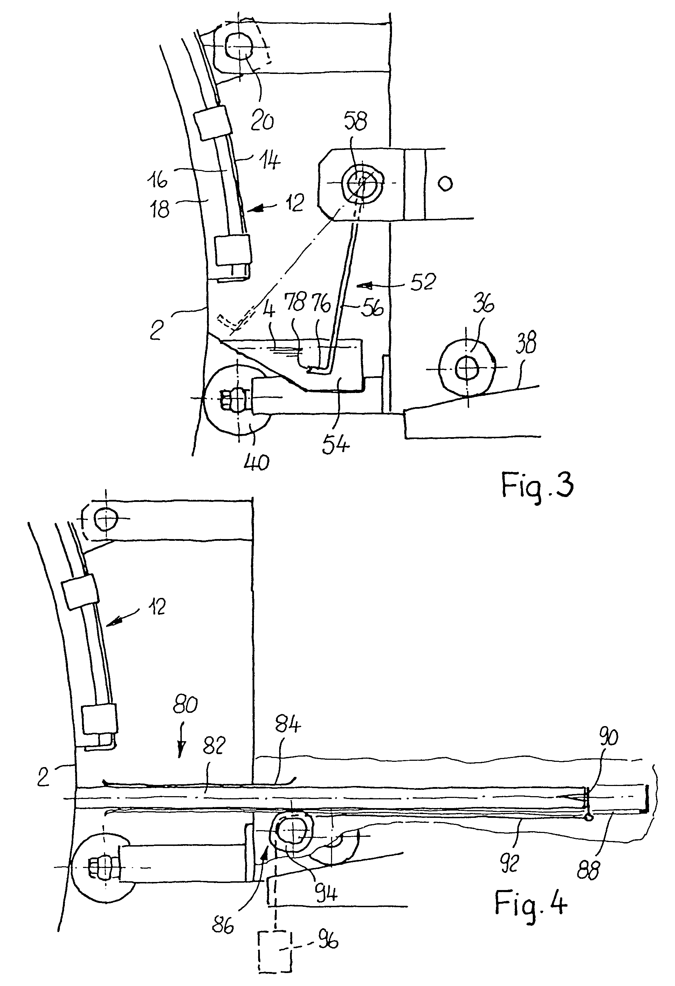

Die Fig. 4 zeigt eine abgewandelte Aufgabevorrichtung 80, bei der mehrere Aufgabestifte 82 aus konsistentem Medium 4 gegen das Förderband 2 anstehen. Die in Führungen 84 geführten Aufgabestifte 82 sind mittels einer Vorspannvorrichtung 86 gegen das Förderband 2 vorgespannt. Hierzu ist jede Führung 84 mit einem nach unten weisenden Schlitz 88 versehen, durch den ein am Aufgabestift 82 angesetzter Halter 90 nach unten reicht. Am Halter 90 ist ein Seilzug 92 befestigt, der über eine Umlenkrolle 94 mit einem Belastungsgewicht 96 zusammenwirkt. Dadurch wird sichergestellt, dass der sich langsam abnützende Aufgabestift 82 stets unter der gleichen Vorspannkraft am Förderband 2 anliegt. Die übrige Ausbildung der Vorrichtung entspricht jener der Fig. 1 und 2.

## Patentansprüche

1. Vorrichtung zum Beschichten eines Förderbandes mit einem flüssigen Medium, insbesondere zum Beschichten eines Backbandes mit einem Trennmittel, mit einer Aufgabevorrichtung (6, 80) für das Medium (4) und einer nachgeschalteten Wischervorrichtung (8) zum Verteilen des Mediums (4), wobei die Aufgabevorrichtung (6, 80) und die Wischervorrichtung (8) am Umfang einer Umlenktrommel (10) des Förderbandes (2) angeordnet sind, dadurch gekennzeichnet, dass die Wischervorrichtung (8) in Förderrichtung des Förderbandes (2) verlaufende, mit Abstand voneinander angeordnete Wischer (12) aufweist, die quer zur Förderrichtung hin- und herbewegbar sind.

2. Vorrichtung nach Anspruch 1, dadurch gekennzeichnet, dass die Wischer (12) gelenkig gelagerte Wischerblätter (14) aufweisen, die über eine elastische Unterlage (16) eine Kontaktschicht (18), vorzugsweise eine Filzschicht, tragen.

3. Vorrichtung nach Anspruch 1, dadurch gekennzeichnet, dass sie schwimmend gelagert ist und sich über Stützrollen (40) am über die Umlenktrommel (10) geführten Förderband (2) abstützt.

4. Vorrichtung nach Anspruch 3, dadurch gekennzeichnet, dass sie ein Gehäuse (34) aufweist, das über Rollen (36) auf gegen die Umlenktrommel (10) geneigten Schienen (38) gelagert ist, so dass sie mittels einer gegen die Umlenktrommel (10) weisenden Schwerkraftkomponente gegen diese vorgespannt ist.

5. Vorrichtung nach Anspruch 1, dadurch gekennzeichnet, dass sie eine Arretiervorrichtung (42) zum Feststellen der Vorrichtung mit Abstand von der Umlenktrommel (10) aufweist.

6. Vorrichtung nach Anspruch 1, dadurch gekennzeichnet, dass die Aufgabevorrichtung (80) mehrere quer zum Förderband (2) angeordnete, an diesem anliegende Aufgabestifte (82) aufweist.

7. Vorrichtung nach Anspruch 6, dadurch gekennzeichnet, dass die Aufgabestifte (82) mittels einer gewichtsbelasteten Vorspannvorrichtung (86) am Förderband (2) anstehen.

8. Vorrichtung nach Anspruch 1, dadurch gekennzeichnet, dass die Aufgabevorrichtung (6) mehrere quer zum Förderband (2) angeordnete Aufgabeglieder (52) aufweist, die aus einer Vorratswanne (54) für das Medium (4) plötzlich gegen das Förderband (2) bewegbar sind, um Medium (4) aus der Vorratswanne (54) gegen das Förderband (2) zu schleudern.

9. Vorrichtung nach Anspruch 8, dadurch gekennzeichnet, dass die Aufgabeglieder (52) an ihren freien Enden Mitnahmenäpfe (78) für das Medium (4) aufweisen.

10. Vorrichtung nach den Ansprüchen 8 oder 9, dadurch gekennzeichnet, dass die Aufgabeglieder (52) als vorzugsweise gegen das Förderband (2) abgewinkelte Arme (56) ausgebildet sind, die oberhalb der Vorratswanne (54) an einer Welle (58) befestigt sind, die mittels eines Mitnehmerhebels (60) mit einer Nockenscheibe (64) mit mindestens einer Unstetigkeitsstelle (72) zusammenwirkt.

11. Vorrichtung nach Anspruch 10, dadurch gekennzeichnet, dass der Mitnehmerhebel (60) mittels einer Vorspannfeder (66) gegen die Nockenscheibe (64) vorgespannt ist.

12. Vorrichtung nach den Ansprüchen 10 oder 11, dadurch gekennzeichnet, dass der Mitnehmerhebel (60) beim Vorschnellen an der Unstetigkeitsstelle (72) der Nockenscheibe (64) auf einen Stossdämpfer (74) aufschlägt.

## Claims

1. Apparatus for coating a conveyor belt with a liquid medium, in particular for coating a baking belt with a release agent, comprising a delivery means (6, 80) for the medium (4) and a wiper means (8) disposed downstream thereof for distributing the medium (4), wherein the delivery means (6, 80) and the wiper means (8) are disposed at the periphery of a guide drum (10) of the conveyor belt (2), characterised in that the wiper means (8) has wipers (12) which extend in the direction of conveying movement of the conveyor belt (2) and which are arranged at a spacing from each other and which are reciprocable transversely with respect to the direction of conveying movement.

2. Apparatus according to claim 1 characterised in that the wipers (12) have hingedly mounted wiper blades (14) which carry a contact layer (18), preferably a felt layer, over an elastic support (16).

3. Apparatus according to claim 1 characterised in that it is mounted floatingly and is supported by way of support rollers (40) on the conveyor belt (2) which is guided over the guide drum (10).

4. Apparatus according to claim 3 characterised in that it has a housing (34) which is mounted by means of rollers (36) on rails (38) which are inclined towards the guide drum (10) so that it is biassed theretowards by means of a gravitational force component which is towards the guide drum (10).

5. Apparatus according to claim 1 characterised in that it has an arresting means (42) for locking the apparatus at a spacing from the guide drum (10).

6. Apparatus according to claim 1 characterised in that the delivery means (80) has a plurality of delivery pins (82) which are arranged transversely with respect to the conveyor belt (2) and which bear thereagainst.

7. Apparatus according to claim 6 characterised in that the delivery pins (82) bear against the conveyor belt (2) by means of a biassing means (86) which is loaded by a weight.

8. Apparatus according to claim 1 characterised in that the delivery means (6) has a plurality of delivery members (52) which are arranged transversely with respect to the conveyor belt (2) and which are abruptly movable towards the conveyor belt (2) from a supply trough (54) for the medium (4), in order to fling medium (4) from the supply trough (54) towards the conveyor belt (2).

9. Apparatus according to claim 8 characterised in that the delivery members (52) are provided at their free ends with entrainment cups (78) for the medium (4).

10. Apparatus according to claim 8 or claim 9 characterised in that the delivery members (52) are formed as arms (56) which are preferably bent over towards the conveyor belt (2) and which are secured above the supply trough (54) to a shaft (58) which co-operates by means of an entrainment lever (60) with a cam disc (64) having at least one point of discontinuity (72).

11. Apparatus according to claim 10 characterised in that the entrainment lever (60) is biassed against the cam disc (64) by means of a biassing spring (6).

12. Apparatus according to claim 10 or claim 11 characterised in that, when the entrainment lever (60) jumps forward at the point of discontinuity (72) on the cam disc (64), the entrainment lever strikes against a shock absorber (74).

## Revendications

1. Dispositif pour enduire une bande transporteuse avec un produit liquide, notamment pour enduire une bande de cuisson avec un agent de séparation, dispositif comportant des moyens de distribution (6, 80) pour le produit (4) et des moyens d'essuyage (8) branchés à la suite pour répartir le produit (4), les moyens de distribution (6, 80) et les moyens d'essuyage (8) étant disposés à la périphérie d'un tambour de renvoi (10) de la bande transporteuse (2), dispositif caractérisé en ce que les moyens d'essuyage (8) s'étendant dans la direction de transport de la bande transporteuse (2) comportent des organes d'essuyage disposés à une certaine distance les uns des autres, et qui sont susceptibles d'être déplacés d'un mouvement de va-et-vient transversalement par rapport à la direction de transport.

2. Dispositif selon la revendication 1, caractérisé en ce que les organes d'essuyage (12) comportent des râclettes d'essuyage (14) montées de façon articulée, et qui, par l'intermédiaire d'une sous-couche élastique (16), portent une couche de contact (18), de préférence une couche de feutre.

3. Dispositif selon la revendication 1, caractérisé en ce qu'il est monté flottant, et qu'il prend appui par l'intermédiaire de galets d'appui (40) contre la bande transporteuse (2) guidé sur le tambour de renvoi (10).

4. Dispositif selon la revendication 3, caractérisé en ce qu'il comporte un boîtier (34) qui est supporté par l'intermédiaire de galets (36) sur des rails (38) inclinés par rapport au tambour de renvoi (10), de sorte que le dispositif est poussé contre le tambour de renvoi (10) par une composante de gravité orientée vers ce tambour.

5. Dispositif selon la revendication 1, caractérisé en ce qu'il comporte un moyen d'arrêt (42) pour fixer le dispositif à une certaine distance du tambour de renvoi (10).

6. Dispositif selon la revendication 1, caractérisé en ce que les moyens de distribution (80) risé en ce que les moyens de distribution (80) comportent plusieurs broches de distribution (82) s'appliquant sur la bande transporteuse (2) et réparties transversalement par rapport à cette bande.

7. Dispositif selon la revendication 6, caractérisé en ce que les broches de distribution (82) sont appliquées contre la bande transporteuse (2) grâce à un des moyens de précontrainte (86) sollicité par un poids.

8. Dispositif selon la revendication 1, caractérisé en ce que les moyens de distribution (6) comportent plusieurs organes de distribution (52) répartis transversalement par rapport à la bande transporteuse (2) et qui sont susceptibles d'être déplacés brusquement depuis un bac de réserve (54) pour le produit (4) contre la bande transporteuse (2), pour projeter contre cette bande transporteuse (2) du produit (4) extrait du bac de réserve (54).

9. Dispositif selon la revendication 8, caractérisé en ce que les organes de distribution (52) comportent à leurs extrémités libres, des godets d'entraînement (78) pour le produit (4).

10. Dispositif selon les revendications 8 ou 9, caractérisé en ce que les organes de distribution (52) revêtent la forme de bras (56), de préférence coudés en direction de la bande transporteuse (2), et qui sont fixés au-dessus du bac de réserve (54) à un arbre (58) qui coopère par l'intermédiaire d'un levier d'entraînement (60) avec un disque à came (64) comportant au moins un emplacement d'instabilité (72).

11. Dispositif selon la revendication 10, caractérisé en ce que le levier d'entraînement (60) est précontraint contre le disque à came (64) au moyen d'un ressort de précontrainte (6).

12. Dispositif selon les revendications 10 ou 11, caractérisé en ce que le levier d'entraînement (60) lors de sa précipitation à l'emplacement d'instabilité (72) du disque à came (64), vient heurter un amortisseur de chocs (74).

Fig.1

Fig.2

0 052 281

Fig. 3

Fig. 4

9